# EUROPEAN PATENT SPECIFICATION

(11) **EP 2 463 172 B1**
(45) Date of publication and mention of the grant of the patent: **19.11.2014**
(21) Application number: 11191034.5
(22) Date of filing: 29.11.2011
(51) Int. Cl.: B60W 50/16

(54) **Safety system for a vehicle and a method for a safety system**
Sicherheitssystem für ein Fahrzeug und Verfahren für ein Sicherheitssystem
Système de sécurité pour véhicule et procédé pour système de sécurité

(30) Priority: 13.12.2010 SE 1051309
(43) Date of publication of application: 13.06.2012
(73) Proprietor: Scania CV AB, 151 87 Södertälje (SE)
(72) Inventor: Andersson, Jon, 144 62 Rönninge (SE); Ah-King, Joseph, 15160 Södertälje (SE)

(56) References cited:
- EP-A1- 1 074 904
- US-A1- 2008 174 415
- US-A1- 2009 153 313

## Description

### Field of the invention

The present invention relates to a safety system and a method for a safety system for a vehicle and comprises a lane departure warning system according to the preamble of the independent claims.

The invention is primarily concerned with a safety system and a method, for a truck or a bus, but the system is also applicable to other vehicles, e.g. cars.

### Background to the invention

It has become increasingly common that vehicles, both trucks, buses and cars, are equipped with so-called "lane departure warning" (LDW) systems intended to warn a driver when the vehicle begins to move out of its current traffic lane without a flasher being activated. These systems are intended to reduce accidents by focusing on the main causes of collisions, viz. driver error, disturbing circumstances and driver tiredness.

There are two main types of systems:
Systems which warn the driver that the vehicle is leaving its lane, which warnings may be delivered by lamp signals, acoustic signals or vibration signals.
Systems which warn the driver and which, if no action follows, take automatic steps to ensure that the vehicle stays in its lane.

A typical LDW system uses a camera to detect lane markings and uses advanced image processing algorithms to analyse the resulting image information. The analysis results are then used to warn the driver and/or impart guiding motion to the steering wheel in order to keep the vehicle in its lane.

US 7,269,493 refers to an LDW system intended to enhance safety by generating a warning in the form of an acoustic signal if the system finds that the vehicle is leaving its current lane in an uncontrolled way. If the driver does not act, the system will activate the vehicle's brake system.

US 7,551,103 refers to a warning system for vehicles, comprising inter alia an LDW system improved by associating with it an image processing system which receives and processes images representing the situation around the vehicle in order inter alia to enhance safety during lane changes. The information which the system gathers may be conveyed to the driver in various ways, e.g. by visual presentation. It is also possible to have a vibrating unit in the steering wheel for conveying the information to the driver in a tactile way in cases where risks arise, e.g. when overtaking.

A further example of an LDW system is described in WO 2009/022947 which refers to a method and a device intended to make it easier for a vehicle to be in a traffic lane. It describes how the actual lane control is conducted by indicating what signals are used, how the calculations are done and how the control of the vehicle is influenced. It also describes how the system handles the situation when a deliberate lane change is to be effected. In such a case the system is deactivated and a warning signal is generated, e.g. in the form of an optical signal, an acoustic signal or a haptic signal.

An LDW system is usually allowed only a limited power to take over active control of the vehicle, since the driver has continually to have the possibility of controlling the vehicle. There may therefore be bends or other driving situations in which the control facilities available to the system are not sufficient to keep the vehicle in its lane and which therefore need to be drawn to the driver's attention.
There may also be other reasons for the system being deactivated while in operation, e.g. when the sensors lose signals or targets, etc. An example of such a system is described in US 2009/153313 which refers to a control device and a method to recognize lanes at all times, for an example due to snow/dirt, and that the driver would still rely on the assumption that the system is working as intended.

The commonest way of presenting the information is in the form of visual symbols on the driver display. Another commonly used way is to generate acoustic signals intended to draw the driver's attention to a specific circumstance.

A further way of communicating with the driver is haptic (or tactile) communication, e.g. via the steering wheel. Tactile communication means that the signal is perceptible to the driver's sense organs, e.g. in the form of a vibration.

An example of information communicated haptically to the driver via the steering wheel appears in US 2007/0051547 which refers to a method for assisting him/her during various manoeuvres, e.g. when parking. Different turning motions may then be imparted to the steering wheel depending on the extent to which the driver follows a calculated itinerary, e.g. an increasing motion may be imparted if the steering wheel is not turned in a "correct" direction.

Information may also be conveyed haptically to the driver by the steering wheel being caused to vibrate to different degrees depending on the particular information to be conveyed.
Today's LDW systems can be activated or deactivated by the driver manually. It is also advantageous that the system be automatically deactivated if for example its sensors, e.g. cameras, receive no relevant input signals and the driver has to take over full control of the vehicle. Another example where the driver has actively to take the more active part in driving the vehicle is if the system cannot cope with steering it, e.g. when negotiating tight curves.
There is therefore a need to inform the vehicle driver of a change in the state of the LDW system, so the object of the invention is to propose a safety system with an LDW system which indicates when a change in the state of the system takes place.

### Summary of the invention

The above objects are achieved with the invention defined by the independent claim.

Preferred embodiments are defined by the dependent claims.

The invention thus comprises a safety system for a vehicle with a lane departure warning (LDW) system adapted to delivering a status signal which represents the state of the LDW system. The invention further comprises a method for a safety system for a vehicle.

The safety system comprises an indicating unit comprising a processing unit and a memory unit, which processing unit is adapted to receiving the status signal, comparing it with predetermined status criteria for the LDW system which are stored in the memory unit, and delivering an indicating signal based on the comparison. The indicating signal is a tactile signal adapted to exerting tactile influence on the vehicle's driver and to being chosen, on the basis of the result of the comparison, from a set of different tactile signals which are stored in the memory unit, each of them related to a predetermined state, or predetermined change of state, of the LDW system.

Applying the present invention makes the driver aware of changes of state of the LDW system in a clear and intuitive way via a tactile signal through the steering wheel or the driving seat or via some other object with which the driver is in contact or which upon activation comes into contact with him/her.

According to an embodiment of the invention, the driver is informed of the LDW system having been deactivated, which may entail him/her having to take a more active part in driving the vehicle. However, the way in which the driver is informed needs to be such as not to disturb or irritate him/her and to leave no doubt as to what he/she is being informed about. For many systems, among them those which have to do with the vehicle's location on the road and relative to other road users, signals via the steering wheel are the most intuitive means of communication. They keep the driver constantly aware while driving of how the vehicle is behaving, and applying the present invention would cause him/her to know about any imminent change in the behaviour of the vehicle. Where appropriate, the tactile signal in the steering wheel may be combined with other tactile, visual or acoustic signals.

Unlike for example the driver being informed via an acoustic signal that the system has been deactivated, the system according to the present invention would not irritate or disturb so much and, in addition, the information would only be received by the driver him/herself, not by any passengers, for whom it would be undesirable, e.g. in a bus. Moreover, the driver will often interpret a signal in the steering wheel and relate it to correct systems more easily than a warning sound. A warning sound would probably need to be backed by a visual symbol, a combination which would be inferior to a haptic signal in the steering wheel in requiring the driver to take attention away from the road in order to look at the symbol and then interpret it.

### Brief description of drawings

Figure 1 is a block diagram schematically illustrating the present invention.
Figure 2 is a diagram illustrating a preferred embodiment of the present invention.
Figure 3 is a flowchart illustrating the method according to the present invention.

### Detailed description of preferred embodiments of the invention

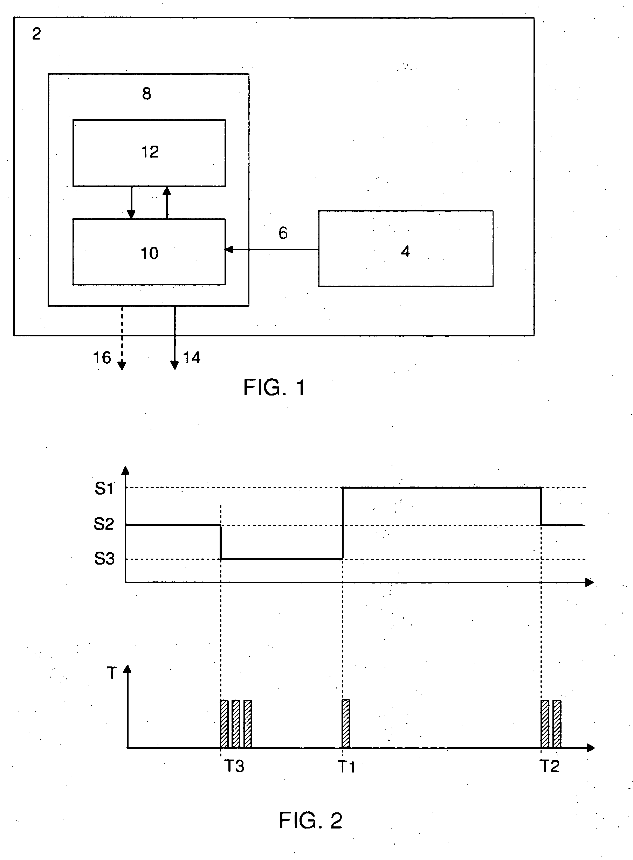

Figure 1 is a block diagram schematically illustrating a safety system 2 for a vehicle, comprising a lane departure warning (LDW) system 4 adapted to delivering a status signal 6 which represents the state of the LDW system. The status signal is preferably accessible via the vehicle's CAN (controller area network) bus.

The safety system comprises an indicating unit 8 comprising a processing unit 10 and a memory unit 12, which processing unit is adapted to receiving the status signal 6 and to comparing it with predetermined status criteria for the LDW system which are stored in said memory unit. Information which defines the status criteria is preferably fed into the memory unit at the time when the safety system is activated. The status criteria indicate what states the LDW system might be in.

The processing unit is further adapted to delivering an indicating signal 14 based on the comparison, in the form of a tactile signal adapted to exerting tactile influence on the vehicle's driver. The indicating signal is chosen, on the basis of the result of the comparison, from a set of different tactile signals which are stored in the memory unit, each of them related to a predetermined state, or predetermined change of state, of the LDW system.

The predetermined criteria represent at least two of the following states of the LDW system:
- Active
- Inactive
- Needing active control by driver
- LDW system taking over control
- Warning to driver
- Switching off.

The above list is only to be regarded as exemplifying. There are of course more states which are possible for the LDW system and may need identifying.

Figure 2 is a schematic depiction of graphs illustrating the present invention. The top graph shows three different possible states S1, S2 and S3 for the status signal in the example concerned. The bottom graph shows relating tactile signals T1, T2 and T3 which are generated when the LDW system changes to the respective states S1, S2 and S3. The tactile signal T1 in the example depicted is a vibratory signal comprising one vibration, T2 two vibrations and T3 three vibrations. It is also possible to generate different tactile signals depending on a particular change of state. For example, a tactile signal T4 might be generated if the system changes from state S1 to state S2, whereas a different tactile signal T5 might be generated if for example the system changes from state S3 to state S2.

The set of tactile signals comprises a signal, e.g. in the form of vibrations, adapted to influencing the driver via the steering wheel, and a signal adapted to influencing the driver via the driving seat or via some other part of the vehicle which may be brought into contact with the driver to convey tactile signals to him/her. It is also possible, according to a further embodiment, for said set of tactile signals to comprise a combined signal adapted to influencing the driver via. for example, both the steering wheel and the driving seat.

According to an embodiment, the indicating unit is adapted to generating another indicating signal 16 in conjunction with the tactile signal, likewise on the basis of the results of the comparison, in the form of an acoustic or lamp signal. The lamp signal may be in the form of symbols which light up on the driver's panel. This may for example be relevant in the case of particular states of the LDW system which it is extra important for the driver to be aware of.

A requirement for the safety system to be able to adjust the generated tactile signals according to the state of the LDW system is that its states be accessible via the status signal. The LDW system is therefore adapted to generating a status signal containing information about its state in the form of at least two of the following states: active, inactive, needing active control by driver, LDW system taking over control, warning to driver, switching off. As mentioned above, other states may of course be relevant.

The present invention comprises also a method for a safety system 2 for a vehicle, which system comprises a lane departure warning (LDW) system 4.

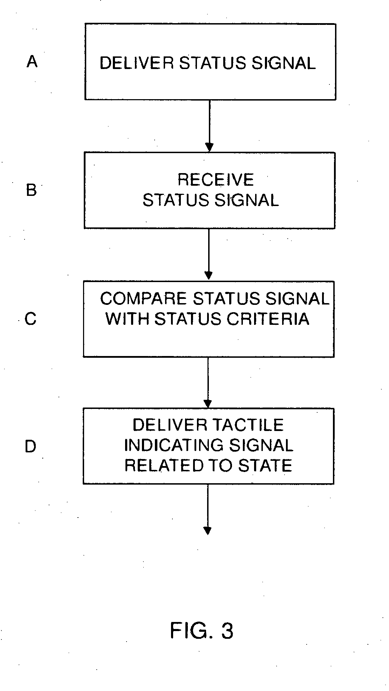

The method will now be described with reference to the flowchart in Figure 3. The method comprises
A) delivering a status signal 6 which indicates the state of the LDW system,
B) receiving said status signal 6 in a processing unit 10 situated in an indicating unit 8,
C) comparing this signal in the processing unit 10 with predetermined status criteria for the LDW system which are stored in a memory unit 12 situated in the indicating unit, and
D) delivering an indicating signal 14 based on the comparison, in the form of a tactile signal adapted to exerting tactile influence upon the vehicle's driver and chosen on the basis of the result of the comparison from a set of different tactile signals which are stored in the memory unit, each of them related to predetermined state, or predetermined change of state, of the LDW system.

The predetermined criteria represent at least two of the following states of the LDW system: active, inactive, needing active control by driver, LDW system taking over control, warning to driver, switching off.

According to an embodiment, the method comprises said set of tactile signals comprising a signal adapted to influencing the driver via the steering wheel.

According to another embodiment, the method comprises said set of tactile signals comprising a signal adapted to influencing the driver via the driving seat.

According to a further embodiment, the method comprises said set of tactile signals comprising a combined signal adapted to influencing the driver via both the steering wheel and the driving seat.

The method comprises also the indicating unit 8 being preferably adapted to generating another indicating signal 16 in conjunction with said indicating signal 14, depending on the result of the comparison, said other signal being an acoustic or lamp signal.

The method preferably comprises the LDW system being adapted to generating a status signal containing information about states of the LDW system which comprise at least two of the following: active, inactive, needing active control by driver, LDW system taking over control, warning to driver, switching off.

The present invention is not restricted to the preferred embodiments described above. Sundry alternatives, modifications and equivalents may be used. The above embodiments are therefore not to be regarded as limiting the invention's protective scope which is defined by the attached claims.

## Claims

1. A safety system (2) for a vehicle, comprising a lane departure warning (LDW) system (4) adapted to delivering a status signal (6) which indicates the state of the LDW system, **characterised in that** the safety system comprises an indicating unit (8) comprising a processing unit (10) and a memory unit (12), said processing unit being adapted to receiving said status signal (6), to comparing it with predetermined status criteria for the LDW system which are stored in said memory unit, and to delivering an indicating signal (14) based on the comparison, in the form of a tactile signal adapted to exerting tactile influence upon the vehicle's driver, which indicating signal is chosen, on the basis of the result of the comparison, from a set of different tactile signals which are stored in the memory unit, each of them related to a predetermined state, or predetermined change of state, of the LDW system.

2. A safety system according to claim 1, whereby said predetermined criteria represent at least two of the following states of the LDW system: active, inactive, needing active control by driver, LDW system taking over control, warning to driver, switching off.

3. A safety system according to claim 1 or 2, whereby said set of tactile signals comprises a tactile signal adapted to influencing the driver via the vehicle's steering wheel.

4. A safety system according to claim 1 or 2, whereby said set of tactile signals comprises a tactile signal adapted to influencing the driver via the driving seat.

5. A safety system according to claim 1 or 2, whereby said set of tactile signals comprises a combined tactile signal adapted to influencing the driver via both the steering wheel and the driving seat.

6. A safety system according to any one of the foregoing claims, whereby said indicating unit (8) is adapted to generating another indicating signal (16) in conjunction with said indicating signal (14), depending on the result of the comparison, said other indicating signal being an acoustic or lamp signal.

7. A safety system according to any one of claims 1-6, whereby said LDW system is adapted to generating a status signal containing information about states of the LDW system which comprise at least two of the following: active, inactive, needing active control by driver, LDW system taking over control, warning to driver, switching off.

8. A method for a safety system (2) for a vehicle, which system comprises a lane departure warning (LDW) system (4), **characterised in that** the method comprises
A) delivering a status signal (6) which indicates the state of the LDW system,
B) receiving said status signal (6) in a processing unit (10) situated in an indicating unit (8),
C) comparing this signal in the processing unit (10) with predetermined status criteria for the LDW system which are stored in a memory unit (12) situated in the indicating unit, and
D) delivering an indicating signal (14) based on the comparison, in the form of a tactile signal adapted to exerting tactile influence upon the vehicle's driver and chosen, on the basis of the result of the comparison, from a set of different tactile signals which are stored in the memory unit, each of them related to a predetermined state, or predetermined change of state, of the LDW system.

9. A method according to claim 8, whereby said predetermined criteria represent at least two of the following states of the LDW system: active, inactive, needing active control by driver, LDW system taking over control, warning to driver, switching off.

10. A method according to claim 8 or 9, whereby said set of tactile signals comprises a tactile signal adapted to influencing the driver via the vehicle's steering wheel.

11. A method according to claim 8 or 9, whereby said set of tactile signals comprises a tactile signal adapted to influencing the driver via the driving seat.

12. A method according to claim 8 or 9, whereby said set of tactile signals comprises a combined tactile signal adapted to influencing the driver via both the steering wheel and the driving seat.

13. A method according to any one of claims 8-12, whereby said indicating unit (8) is adapted to generating another indicating signal (16) in conjunction with said indicating signal (14), depending on the result of the comparison, said other indicating signal being an acoustic or lamp signal.

14. A method according to any one of claims 8-13, whereby said LDW system is adapted to generating a status signal containing information about states of the LDW system which comprise at least two of the following: active, inactive, needing active control by driver, LDW system taking over control, warning to driver, switching off.

## Patentansprüche

1. Sicherheitssystem (2) für ein Fahrzeug, das einen Spurhalteassistenten (4) (engl.: lane departure warning (LDW) system) umfasst, der dazu eingerichtet ist, ein Zustandssignal (6) zu liefern, das den Zustand des Spurhalteassistenten anzeigt, **dadurch gekennzeichnet, dass** das Sicherheitssystem eine Anzeigeeinheit (8) umfasst, die eine Verarbeitungseinheit (10) und eine Speichereinheit (12) aufweist, wobei die Verarbeitungseinheit dazu eingerichtet ist, das Zustandssignal (6) zu empfangen, dieses mit vorbestimmten Zustandskriterien für den Spurassistenten zu vergleichen, die in der Speichereinheit gespeichert sind, und ein auf dem Vergleich basierendes Anzeigesignal (14) in Form eines fühlbaren Signals zu liefern, das dazu eingerichtet ist, fühlbar auf den Fahrer des Fahrzeugs einzuwirken, wobei auf der Basis des Ergebnisses des Vergleichs ein Anzeigesignal aus einer Menge an verschiedenen fühlbaren Signalen ausgewählt wird, die in der Speichereinheit gespeichert sind, wobei jedes dieser Signale auf einen vorbestimmten Zustand oder eine vorbestimmte Zustandsänderung des Spurhalteassistenten bezogen ist.

2. Sicherheitssystem nach Anspruch 1, wobei die vorbestimmten Kriterien wenigstens zwei der folgenden Zustände des Spurhalteassistenten darstellen: aktiv, inaktiv, aktives Steuern des Fahrers benötigend, Spurhalteassistent übernimmt das Steuern, Warnen des Fahrers, Ausschalten.

3. Sicherheitssystem nach Anspruch 1 oder 2, wobei die Menge an fühlbaren Signalen ein fühlbares Signal umfasst, das dazu eingerichtet ist, über das Lenkrad des Fahrzeugs auf den Fahrer einzuwirken.

4. Sicherheitssystem nach Anspruch 1 oder 2, wobei die Menge an fühlbaren Signalen ein fühlbares Signal umfasst, das dazu eingerichtet ist, über den Fahrersitz auf den Fahrer einzuwirken.

5. Sicherheitssystem nach Anspruch 1 oder 2, wobei die Menge an fühlbaren Signalen ein fühlbares Signal umfasst, das dazu eingerichtet ist, über das Lenkrad und den Fahrersitz auf den Fahrer einzuwirken.

6. Sicherheitssystem nach einem der vorhergehenden Ansprüche, wobei die Anzeigeeinheit (8) dazu eingerichtet ist, abhängig von dem Ergebnis des Vergleichs in Verbindung mit dem Anzeigesignal (14) ein weiteres Anzeigesignal (16) zu erzeugen, wobei das weitere Anzeigesignal ein akustisches Signal oder ein Leuchtsignal ist.

7. Sicherheitssystem nach einem der Ansprüche 1 bis 6, wobei der Spurhalteassistent dazu eingerichtet ist, ein Zustandssignal mit Informationen über Zustände des Spurhalteassistenten zu erzeugen, die wenigstens zwei der folgenden Zustände umfassen: aktiv, inaktiv, aktives Steuern des Fahrers benötigend, Spurhalteassistent übernimmt das Steuern, Warnen des Fahrers, Ausschalten.

8. Verfahren für ein Sicherheitssystem (2) für ein Fahrzeug, wobei das System einen Spurhalteassistenten (4) (engl.: lane departure warning (LDW) system) umfasst, **dadurch gekennzeichnet, dass** das Verfahren umfasst
A) Liefern eines Zustandssignals (6), das den Zustand des Spurhalteassistenten anzeigt,
B) Empfangen des Zustandssignals (6) in der Verarbeitungseinheit (10), die in der Anzeigeeinheit (8) angeordnet ist,
C) Vergleichen des Signals in der Verarbeitungseinheit (10) mit vorbestimmten Zustandskriterien des Spurhalteassistenten, die in einer Speichereinheit (12) gespeichert sind, die in der Anzeigeeinheit angeordnet ist, und
D) Liefern eines auf den Vergleich basierenden Anzeigesignals (14) in Form eines fühlbaren Signals, das dazu eingerichtet ist, fühlbar auf den Fahrer des Fahrzeugs einzuwirken, und das auf der Basis des Ergebnisses des Vergleichs aus einer Menge an verschiedenen fühlbaren Signalen ausgewählt wird, die in der Speichereinheit gespeichert sind, wobei jedes der Signale auf einen vorbestimmten Zustand oder eine vorbestimmten Zustandsänderung des Spurhalteassistenten bezogen ist.

9. Verfahren nach Anspruch 8, wobei die vorbestimmten Kriterien wenigstens zwei der folgenden Zustände des Spurhalteassistenten darstellen: aktiv, inaktiv, aktives Steuern des Fahrers benötigend, Spurhalteassistent übernimmt das Steuern, Warnen des Fahrers, Ausschalten.

10. Verfahren nach Anspruch 8 oder 9, wobei die Menge an fühlbaren Signalen ein fühlbares Signal umfasst, das dazu eingerichtet ist, über das Lenkrad des Fahrzeugs auf den Fahrer einzuwirken.

11. Verfahren nach Anspruch 8 oder 9, wobei die Menge an fühlbaren Signalen ein fühlbares Signal umfasst, das dazu eingerichtet ist, über den Fahrersitz auf den Fahrer einzuwirken.

12. Verfahren nach Anspruch 8 oder 9, wobei die Menge an fühlbaren Signalen ein zusammengesetztes fühlbares Signal umfasst, das dazu eingerichtet ist, über das Lenkrad und den Fahrersitz auf den Fahrer einzuwirken.

13. Verfahren nach einem der Ansprüche 8 bis 12, wobei die Anzeigeeinheit (8) dazu eingerichtet ist, abhängig von dem Ergebnis des Vergleichs, in Verbindung mit dem Anzeigesignal (14) ein weiteres Anzeigesignal (16) zu erzeugen, wobei das weitere Anzeigesignal ein akustisches Signal oder ein Leuchtsignal ist.

14. Verfahren nach einem der Ansprüche 8 bis 13, wobei der Spurhalteassistent dazu eingerichtet ist, ein Zustandssignal mit Informationen über Zustände des Spurhalteassistenten zu erzeugen, die wenigstens zwei der folgenden Zustände umfassen: aktiv, inaktiv, aktives Steuern des Fahrers benötigend, Spurhalteassistent übernimmt das Steuern, Warnen des Fahrers, Ausschalten.

## Revendications

1. Système de sécurité (2) pour un véhicule, comprenant un système (4) d'alerte de franchissement de ligne (LDW) adapté pour délivrer un signal d'état (6) qui indique l'état du système LDW, **caractérisé en ce que** le système de sécurité comprend une unité indicatrice (8) comprenant une unité de traitement (10) et une unité de mémoire (12), ladite unité de traitement étant adaptée pour recevoir ledit signal d'état (6), pour le comparer à des critères d'état prédéterminés pour le système LDW qui sont stockés dans ladite unité de mémoire, et pour délivrer un signal indicateur (14) sur la base de la comparaison, sous la forme d'un signal tactile adapté pour exercer une influence tactile sur le conducteur du véhicule, lequel signal indicateur étant choisi, en fonction du résultat de la comparaison, parmi un ensemble de différents signaux tactiles qui sont stockés dans l'unité de mémoire, chacun d'eux concernant un état prédéterminé, ou un changement d'état prédéterminé, du système LDW.

2. Système de sécurité selon la revendication 1, dans lequel lesdits critères prédéterminés représentent au moins deux des états suivants du système LDW : actif, inactif, nécessitant une commande active de la part du conducteur, prise de contrôle par le système LDW, alerte du conducteur, extinction.

3. Système de sécurité selon la revendication 1 ou 2, dans lequel ledit ensemble de signaux tactiles comprend un signal tactile adapté pour influencer le conducteur via le volant de direction du véhicule.

4. Système de sécurité selon la revendication 1 ou 2, dans lequel ledit ensemble de signaux tactiles comprend un signal tactile adapté pour influencer le conducteur via le siège conducteur.

5. Système de sécurité selon la revendication 1 ou 2, dans lequel ledit ensemble de signaux tactiles comprend un signal tactile combiné adapté pour influencer le conducteur via le volant de direction du véhicule et le siège conducteur.

6. Système de sécurité selon l'une quelconque des revendications précédentes, dans lequel ladite unité indicatrice (8) est adaptée pour générer un autre signal indicateur (16) conjointement avec ledit signal indicateur (14), en fonction du résultat de la comparaison, ledit autre signal indicateur étant un signal acoustique ou lumineux.

7. Système de sécurité selon l'une quelconque des revendications 1 à 6, dans lequel ledit système LDW est adapté pour générer un signal d'état contenant des informations concernant des états du système LDW qui comprennent au moins deux des états suivants : actif, inactif, nécessitant une commande active de la part du conducteur, prise de contrôle par le système LDW, alerte du conducteur, extinction.

8. Procédé pour un système de sécurité (2) pour un véhicule, lequel système comprend un système (4) d'alerte de franchissement de ligne (LDW) **caractérisé en ce que** le procédé comprend :
A) la délivrance d'un signal d'état (6) qui indique l'état du système LDW,
B) la réception dudit signal d'état (6) dans une unité de traitement (10) située dans une unité indicatrice (8),
C) la comparaison de ce signal dans l'unité de traitement (10) à des critères d'état prédéterminés pour le système LDW qui sont stockés dans une unité de mémoire (12) située dans ladite unité indicatrice, et
D) la délivrance d'un signal indicateur (14) sur la base de la comparaison, sous la forme d'un signal tactile adapté pour exercer une influence tactile sur le conducteur du véhicule et choisi, en fonction du résultat de la comparaison, parmi un ensemble de différents signaux tactiles qui sont stockés dans l'unité de mémoire, chacun d'eux concernant un état prédéterminé, ou un changement d'état prédéterminé, du système LDW.

9. Procédé selon la revendication 8, dans lequel lesdits critères prédéterminés représentent au moins deux des états suivants du système LDW : actif, inactif, nécessitant une commande active de la part du conducteur, prise de contrôle par le système LDW, alerte du conducteur, extinction.

10. Procédé selon la revendication 8 ou 9, dans lequel ledit ensemble de signaux tactiles comprend un signal tactile adapté pour influencer le conducteur via le volant de direction du véhicule.

11. Procédé selon la revendication 8 ou 9, dans lequel ledit ensemble de signaux tactiles comprend un signal tactile adapté pour influencer le conducteur via le siège conducteur.

12. Procédé selon la revendication 8 ou 9, dans lequel ledit ensemble de signaux tactiles comprend un signal tactile combiné adapté pour influencer le conducteur via le volant de direction du véhicule et le siège conducteur.

13. Procédé selon l'une quelconque des revendication 8 à 12, dans lequel ladite unité indicatrice (8) est adaptée pour générer un autre signal indicateur (16) conjointement avec ledit signal indicateur (14), en fonction du résultat de la comparaison, ledit autre signal indicateur étant un signal acoustique ou lumineux.

14. Procédé selon l'une quelconque des revendication 8 à 13, dans lequel ledit système LDW est adapté pour générer un signal d'état contenant des informations concernant des états du système LDW qui comprennent au moins deux des états suivants : actif, inactif, nécessitant une commande active de la part du conducteur, prise de contrôle par le système LDW, alerte du conducteur, extinction.
